(19) Europäisches Patentamt
European Patent Office
Office européen des brevets

(11) **EP 4 462 537 A1**

(12) **EUROPEAN PATENT APPLICATION**
published in accordance with Art. 153(4) EPC

(43) Date of publication:
**13.11.2024 Bulletin 2024/46**

(21) Application number: **23855803.5**

(22) Date of filing: **17.05.2023**

(51) International Patent Classification (IPC):
$H01M\ 10/0525^{(2010.01)}$    $H01M\ 4/133^{(2010.01)}$
$H01M\ 4/134^{(2010.01)}$    $H01M\ 10/0587^{(2010.01)}$

(52) Cooperative Patent Classification (CPC):
Y02E 60/10

(86) International application number:
**PCT/CN2023/094776**

(87) International publication number:
**WO 2024/192869 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2023 CN 202310287838**

(71) Applicant: **Battero Tech Corporation Limited Shanghai 201400 (CN)**

(72) Inventor: **LIU, Yang Fengxian District Shanghai 201400 (CN)**

(74) Representative: **Vitina, Maruta et al Agency TRIA ROBIT P.O. Box 22 1010 Riga (LV)**

(54) **CYLINDRICAL BATTERY, POWER BATTERY PACK AND ELECTRIC APPARATUS**

(57)    A cylindrical battery includes a cell and a casing. The cell is arranged in the casing, and includes a positive electrode and a negative electrode. An active material of the negative electrode includes silicon and graphite, and the negative electrode satisfies the following formula:

$$R_1 = \frac{b + 4.23w}{s}$$

, where $R_1$ represents a first parameter in $\text{mm}^{-1}$; $b$ represents a first constant, which is related to a type of the graphite and a negative electrode, and $-0.15 \leq b \leq 0.8$; $w$ represents a weight percentage of the silicon in the active material; and $s$ represents a thickness of the casing, mm. This application also discloses a power battery pack and an electrically-powered device.

**Fig. 1**

Processed by Luminess, 75001 PARIS (FR)

**Description**

**TECHNICAL FIELD**

This application relates to battery technologies, and more specifically to a cylindrical battery, a power battery pack and an electrically-powered device.

**BACKGROUND**

Cylindrical batteries are widely recognized by manufacturers due to their advantages of simple design, standardized and simple manufacturing process, low cost and strong application flexibility. Traditional cylindrical batteries are not suitable as power batteries due to their small sizes. In view of this, the existing cylindrical batteries become larger and larger, with a diameter being up to 46 mm, allowing for an enhanced energy density. Due to the layer-by-layer coiled design, the electrodes of the cylindrical batteries are subjected to the winding tension, which can effectively inhibit the expansion of the electrodes. Therefore, the coiled electrode design is more suitable for the silicon negative electrode which will undergo a large volume expansion after charging and discharging. The cell design of the cylindrical battery is suitable for a high-energy-density material system.

At present, the standard cycle life of cylindrical batteries prepared with high-energy-density materials (i.e., 250 Wh/kg) is about 1,000 cycles, which is an ordinary level. For cylindrical batteries made from cells with the same size, every 10% increase in energy density will result in a 25% decline in the cycle life of cylindrical batteries. In the case of increasing the energy density, it will be difficult for cylindrical batteries to meet the requirements of power batteries in terms of the cycle life, and the cycle performance of cylindrical batteries often suffers a dramatic attenuation at the late stage of the cycle life. When the energy density is greater than 250 Wh/kg, the silicon content in the material for preparing the battery cell will also increase, and the higher silicon content will result in great expansion of the electrode during the cycling process, thereby tearing and damaging the case of the cylindrical battery, and ultimately leading to the failure of the cell, and even safety accidents. The cycle life of the cells prepared with high-energy-density materials is undesirable, and it is difficult to improve the cycle life of the existing cylindrical batteries while ensuring the safety.

Therefore, it is necessary to develop a cylindrical battery, a power battery pack and an electrically-powered device to solve the above problems in the prior art.

**SUMMARY**

An objective of the present disclosure is to provide a cylindrical battery, a power battery pack and an electrically-powered device, which effectively improves the cycle life of the cylindrical battery while ensuring the safety.

To achieve the above objective, the following technical solutions are adopted.

In a first aspect, this application provides a cylindrical battery, comprising:

a cell; and
a casing;
wherein the cell is arranged in the casing; the cell comprises a positive electrode and a negative electrode; an active material of the negative electrode comprises silicon and graphite; and the negative electrode satisfies the following formula:

$$R_1 = \frac{b + 4.23w}{s};$$

and

$$0.6 \leq R_1 \leq 3.3;$$

wherein $R_1$ represents a first parameter in mm$^{-1}$; $b$ represents a first constant, which is related to a type of the graphite and a compaction density of the negative electrode, and $-0.15 \leq b \leq 0.8$; $w$ represents a weight percentage of the silicon in the active material; and $s$ represents a thickness of the casing in mm.

The beneficial effects of the cylindrical battery of the present disclosure are described below. In this application,

the first parameter $R_1$ of the cylindrical battery is limited to a range of 0.6-3.3 mm$^{-1}$, so that the cylindrical battery will not be torn and broken, and the cycle life of the cylindrical battery can be significantly improved. Thus, the present disclosure can prolong the cycle life of the cylindrical battery while safeguarding the safety of the cylindrical battery.

In some embodiments, a range of the first parameter $R_1$ is any one of 0.6-3 mm$^{-1}$, 0.6-2.5 mm$^{-1}$ and 0.6-2.0 mm$^{-1}$.

In some embodiments, the negative electrode further satisfies the following formula:

$$R_2 = \frac{b' + 5.26w}{s};$$

and

$$1 \leq R_2 \leq 4.6;$$

wherein $R_2$ represents a second parameter in mm$^{-1}$; $b'$ represents a second constant, which is related to the type of the graphite and the compaction density of the negative electrode, and $-0.2 \leq b' \leq 1.5$; $w$ represents the weight percentage of the silicon in the active material of the negative electrode; and $s$ represents the thickness of the casing, mm.

In some embodiments, a range of the second parameter $R_2$ is any one of 1-4 mm$^{-1}$, 1-3 mm$^{-1}$ and 1-2.5 mm$^{-1}$.

In some embodiments, w and $s$ satisfy the following formula:

$$0.22 \leq \frac{w}{s} \leq 0.42;$$

wherein $w$ represents the weight percentage of the silicon in the active material of the negative electrode; and $s$ represents the thickness of the casing, mm.

In some embodiments, a ratio of $w$ to $s$ is 0.23 mm$^{-1}$, 0.25 mm$^{-1}$, 0.27 mm$^{-1}$, 0.29 mm$^{-1}$, 0.30 mm$^{-1}$, 0.31 mm$^{-1}$, 0.33 mm$^{-1}$, 0.35 mm$^{-1}$, 0.37 mm$^{-1}$, 0.39 mm$^{-1}$, 0.40 mm$^{-1}$, or 0.41 mm$^{-1}$.

In some embodiments, the thickness of the casing is 0.1-1.0 mm. If the thickness of the casing is less than 0.1 mm, the casing would be torn and broken when the cylindrical battery is in use. If the thickness of the casing is greater than 1.0 mm, it would affect the ratio of its content to that of silicon, thereby affecting the safety and cycle life of the cylindrical battery.

In some embodiments, the graphite is a natural graphite or an artificial graphite.

In some embodiments, the compaction density of the negative electrode is 1.50-1.75 g/cm$^3$.

In some embodiments, the silicon has a particle size of 3-8 $\mu$m. The particle size less than 3 $\mu$m or higher than 8 $\mu$m will make the compaction coefficient of the electrode too high or too low, which affects the safety and cycle life of the cylindrical battery.

In some embodiments, the weight percentage of the silicon in the active material of the negative electrode is 7-50%.

In some embodiments, the positive electrode is prepared through steps of:

adding 92 wt.% of a positive electrode active material, 5 wt.% of a conductive agent, and 3 wt.% of polyvinylidene fluoride (PVDF) to N-methyl-2-pyrrolidone (NMP) followed by stirring to form an active slurry, wherein the conductive agent is carbon black (Super-P);

coating the active slurry on a surface of a positive electrode collector by extrusion followed by drying at 85°C to obtain an active material layer, wherein the positive electrode collector is an Al foil with a thickness of 12 $\mu$m; and

subjecting the positive electrode collector coated with the active material layer to cold pressing, cutting and drying under vacuum at 85°C for 4 h to obtain the positive electrode.

In a second aspect, this application provides a power battery pack, comprising:

a pack; and

the aforementioned cylindrical battery;

wherein the cylindrical battery is provided in plurality, and a plurality of cylindrical batteries are arranged in the pack.

In a third aspect, this application provides an electrically-powered device, comprising: the aforementioned power battery pack.

## BRIEF DESCRIPTION OF THE DRAWINGS

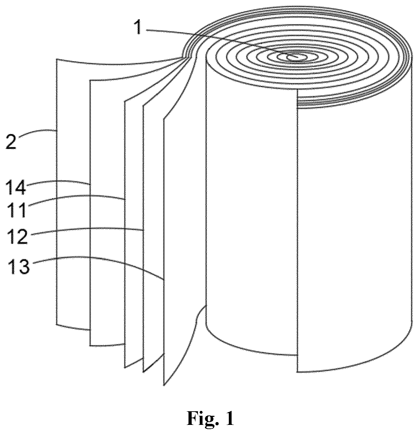

Fig. 1 is a perspective view of a cylindrical battery according to an embodiment of the present disclosure.

## DETAILED DESCRIPTION OF EMBODIMENTS

To make the objectives, technical solutions and advantages of the embodiments of the present disclosure clearer, the technical solutions in the embodiments of the present disclosure will be described clearly and completely below. Obviously, the described embodiments are a part of the embodiments of the present disclosure. Based on the embodiments in the present disclosure, all other embodiments obtained by one of ordinary skill in the art without creative labor shall fall within the scope of protection of the present disclosure. Unless otherwise defined, technical or scientific terms used herein shall have the ordinary meaning understood by one of ordinary skill in the art. The word "including" and similar words used herein are intended to mean that the elements or objects appearing in front of the word encompass the elements or objects enumerated after the word and their equivalents, and do not exclude other elements or objects.

To solve the defects of the existing battery cells, a streamlined design is adopted herein to clarify the key parameters in the cell.

Fig. 1 is a schematic diagram of a cylindrical battery of according to an embodiment of the present disclosure.

In some embodiments, referring to Fig. 1, the cylindrical battery 100 includes a cell 1 and a casing 2. The cell 1 is arranged in the casing 2. The cell 1 includes a positive electrode 13, a first separator 12, a negative electrode 11, and a second separator 14. The active material of the negative electrode 11 includes silicon and graphite, and the negative electrode 11 satisfies the following formula:

$$R_1 = \frac{b + 4.23w}{s};$$

and

$$0.6 \leq R_1 \leq 3.3;$$

where $R_1$ is a first parameter in $mm^{-1}$; $b$ is a first constant, which is related to the type of the graphite and the compaction density of the negative electrode 11, and $-0.15 \leq b \leq 0.8$; w is the weight percentage of the silicon in the active material of the negative electrode; $s$ is the thickness of the casing, mm; ($b + 4.23\ w$) reflects the degree of expansion of the cell; and s reflects the degree of containment of the cell.

Specifically, the first parameter $R_1$ of the cylindrical battery is limited to 0.6-3.3 $mm^{-1}$, so that the casing of the cylindrical battery will not be torn and broken, and the cycle life of the cylindrical battery is significantly improved. Therefore, the present disclosure solves the problem of short cycle life of the cylindrical battery while ensuring the safety of the cylindrical battery.

In some embodiments, a range of the first parameter $R_1$ is 0.6-3 $mm^{-1}$, 0.6-2.5 $mm^{-1}$ or 0.6-2.0 $mm^{-1}$. Specifically, the first parameter $R_1$ is 0.7 $mm^{-1}$, 0.8 $mm^{-1}$, 0.9 $mm^{-1}$, 1.0 $mm^{-1}$, 1.1 $mm^{-1}$, 1.2 $mm^{-1}$, 1.3 $mm^{-1}$, 1.4 $mm^{-1}$, 1.5 $mm^{-1}$, 1.6 $mm^{-1}$, 1.7 $mm^{-1}$, 1.8 $mm^{-1}$, 1.9 $mm^{-1}$, 2.1 $mm^{-1}$, 2.2 $mm^{-1}$, 2.3 $mm^{-1}$, 2.4 $mm^{-1}$, 2.5 $mm^{-1}$, 2.6 $mm^{-1}$, 2.7 $mm^{-1}$, 2.8 $mm^{-1}$, 2.9 $mm^{-1}$, 3.1 $mm^{-1}$, or 3.2 $mm^{-1}$.

In some embodiments, the negative electrode 11 further satisfies the following formulas:

$$R_2 = \frac{b' + 5.26w}{s};$$

and

$$1 \leq R_2 \leq 4.6;$$

where $R_2$ is a second parameter in mm$^{-1}$; $b'$ is a second constant, which is related to the type of the graphite and the compaction density of the negative electrode 11, and $-0.2 \leq b' \leq 1.5$; $w$ is the weight percentage of the silicon in the active material; and $s$ is the thickness of the casing, mm.

In some embodiments, a range of the second parameter $R_2$ is 1-4 mm$^{-1}$, 1-3 mm$^{-1}$ or 1-2.5 mm$^{-1}$. Specifically, the second parameter $R_2$ is 1.3 mm$^{-1}$, 1.5 mm$^{-1}$, 1.7 mm$^{-1}$, 1.9 mm$^{-1}$, 2.0 mm$^{-1}$, 2.2 mm$^{-1}$, 2.4 mm$^{-1}$, 2.6 mm$^{-1}$, 2.8 mm$^{-1}$, 3.1 mm$^{-1}$, 3.3 mm$^{-1}$, 3.5 mm$^{-1}$, 3.7 mm$^{-1}$, 3.9 mm$^{-1}$, 4.1 mm$^{-1}$, 4.3 mm$^{-1}$, or 4.5 mm$^{-1}$.

In some embodiments, w and $s$ satisfy the following formula:

$$0.22 \leq \frac{w}{s} \leq 0.42$$ ;

where $w$ represents the weight percentage of the silicon in the active material; and s represents the thickness of the casing, mm.

In some embodiments, the ratio of $w$ to $s$ is 0.23 mm$^{-1}$, 0.25 mm$^{-1}$, 0.27 mm$^{-1}$, 0.29 mm$^{-1}$, 0.30 mm$^{-1}$, 0.31 mm$^{-1}$, 0.33 mm$^{-1}$, 0.35 mm$^{-1}$, 0.37 mm$^{-1}$, 0.39 mm$^{-1}$, 0.40 mm$^{-1}$, or 0.41 mm$^{-1}$.

In some embodiments, the thickness of the casing is 0.1-1.0 mm. If the thickness of the casing is less than 0.1 mm, the casing would be torn and broken when the cylindrical battery is in use. If the thickness of the casing is greater than 1.0 mm, it would affect the ratio of its content to that of silicon, thereby affecting the safety and cycle life of the cylindrical battery. Specifically, the thickness of the casing is 0.2 mm, 0.3 mm, 0.4 mm, 0.5 mm, 0.6 mm, 0.7 mm, 0.8 mm or 0.9 mm.

In some embodiments, the graphite is a natural graphite or an artificial graphite.

In some embodiments, the compaction density of the negative electrode 11 is 1.50-1.75 g/cm$^3$.

In some embodiments, the silicon has a particle size of 3-8 $\mu$m. The particle size of less than 3 $\mu$m or higher than 8 $\mu$m will make the compaction coefficient of the electrode too high or too low, which affects the safety and cycle life of the cylindrical battery. Specifically, the particle size of the silicon is 4 $\mu$m, 5 $\mu$m, 6 $\mu$m or 7 $\mu$m.

In some embodiments, the weight percentage of the silicon in the active material of the negative electrode is 7-50%. More specifically, the weight percentage of the silicon in the active material of the negative electrode is 10-40%. More specifically, the weight percentage of the silicon to the active material is 9%, 11%, 13%, 15%, 17%, 19%, 21%, 23%, 25%, 27%, 29%, 31%, 33%, 35%, 37%, 39%, 41%, 43%, 45%, 47%, or 49%.

This application also provides a power battery pack, which includes a pack and the aforementioned cylindrical battery, where the cylindrical battery is provided in plurality, and a plurality of cylindrical batteries is arranged in the pack.

This application further provides an electrically-powered device, and the electrically-powered device includes the aforementioned power battery pack.

The spiral parameter $a$ is calculated by $a = \dfrac{d_{ascs}}{2\pi}$ , where $d_{ascs}$ represents the sum of the thicknesses of the positive electrode 13, the first separator 12, the negative electrode 11 and the second separator 14. The thickness of any one of the positive electrode 13, the first separator 12, the negative electrode 11 and the second separator 14 can cause a change in the sum of the thicknesses of the four due to a different state. For example, the thickness of the negative electrode 11 rebounds after lithium ions are embedded in the negative electrode 11.

The spiral parameter $a_1$ of the jelly roll in the uncharged state is calculated by $a_1 = \dfrac{d_{ascs-1}}{2\pi}$ , where $d_{ascs-1}$ represents the sum of the thicknesses of the positive electrode 13, the first separator 12, the negative electrode 11 and the second separator 14 in the uncharged state.

The spiral parameter $a_2$ of the jelly roll in the fully charged state is calculated by $a_2 = \dfrac{d_{ascs-2}}{2\pi}$ , where $d_{ascs-2}$ represents the sum of the thicknesses of the positive electrode 13, the first separator 12, the negative electrode 11 and the second separator 14 in the fully charged state, and the rebound of the negative electrode 11 in the fully charged state is mainly considered herein.

The spiral parameter $a_e$ of the jelly roll in the cycle-end state is calculated by $a_e = \dfrac{d_{ascs-e}}{2\pi}$ , where $d_{ascs-e}$ represents the sum of the thicknesses of the positive electrode 13, the first separator 12, the negative electrode 11 and the second separator 14 in the cycle-end state, and the rebounds of the positive electrode 13 and the negative electrode 11 in the cycle-end state are mainly considered herein.

$$\frac{d_{ascs-2} - d_{ascs-1}}{d_{ascs-1}} \cdot 100\% = b + 4.23w$$
,

where $d_{ascs-2}$ represents the sum of the thicknesses of the positive electrode 13, the first separator 12, the negative electrode 11 and the second separator 14 in the fully charged state; $d_{ascs-1}$ represents the sum of the thicknesses of the positive electrode 13, the first separator 12, the negative electrode 11 and the second separator 14 in the uncharged state; and $b$ represents a first constant, which is related to the type of graphite and the compaction density of the negative electrode 11, and $-0.15 \le b \le 0.8$, and when the type of the graphite and the compaction density of the negative electrode 11 are determined, $b$ is a fixed value; and w represents a weight percentage of the silicon in the active material.

$$\frac{d_{ascs-e} - d_{ascs-1}}{d_{ascs-1}} \cdot 100\% = b' + 5.26w$$

In the formula, $d_{ascs-e}$ is the sum of the thicknesses of the positive electrode 13, the first separator 12, the negative electrode 11 and the second separator 14 in the cycle-end state; $d_{ascs-1}$ represents the sum of the thicknesses of the positive electrode 13, the first separator 12, the negative electrode 11 and the second separator 14 in the uncharged state; $b'$ represents a second constant, which is related to the type of the graphite and the compaction density of the negative electrode 11, and $-0.2 \le b' \le 1.5$, and $b'$ is a fixed value when the type of the graphite and the compaction density of the negative electrode 11 are determined; and $b, b', 4.23$, and $5.26$ in the aforementioned formulas are summarized from the calculation and correction of a large amount of experimental data.

The total winding rotation angle $\Phi$ is calculated by:

$$\Phi = \frac{r \cdot q}{a} ;$$

where r represents the radius of the inner wall of the casing; q represents the group margin; r*q represents the radius of the cell, and $a$ represents the spiral parameter; and the group margin refers to a ratio of the end face cross-sectional area of the cell to the internal cross-sectional area of the casing.

In some embodiments, the first parameter of the cylindrical battery is $R_1$, which ranges from 0.6 to 10 mm$^{-1}$, and is calculated by the following formula:

$$R_1 = \frac{\Phi \cdot \Delta d_{2-1}}{2\pi rqs}$$

$$= \frac{rq \cdot (d_{ascs-2} - d_{ascs-1})}{2\pi rqsa}$$

$$= \frac{d_{ascs-2} - d_{ascs-1}}{2\pi s \frac{d_{ascs-1}}{2\pi}}$$

$$= \frac{(b + 4.23w) d_{ascs-1}}{sd_{ascs-1}}$$

$$= \frac{b + 4.23w}{s} ;$$

where $\Phi$ represents the total angle of winding rotation; $\Delta d_{2-1}$ represents the amount of rebound of the electrode in the fully charged state; r represents the inner wall radius of the casing; q is the group margin; s represents the thickness of the casing, mm; $d_{ascs-2}$ represents the sum of the thicknesses of the positive electrode 13, the first separator 12, the negative electrode 11 and the second separator 14 in the fully charged state; and $d_{ascs-1}$ represents the sum of the thicknesses of the positive electrode 13, the first separator 12, the negative electrode 11 and the second separator 14 in the uncharged state; $a$ represents the spiral parameter of the jelly roll in the uncharged state, i.e., $a=a_1$; $b$ represents a first constant, which is related to the type of the graphite and the compaction density of the negative electrode 11, and $-0.15 \leq b \leq 0.8$; and w represents the weight percentage of the silicon in the active material of the negative electrode.

In some embodiments, the second parameter of the cylindrical battery is $R_2$, which ranges from 1.0 to 10 mm⁻¹, and is calculated by the following formula:

$$R_2 = \frac{\Phi \cdot \Delta d_{e-1}}{2\pi r q s}$$

$$= \frac{rq \cdot (d_{ascs-e} - d_{ascs-1})}{2\pi r q s a}$$

$$= \frac{d_{ascs-e} - d_{ascs-1}}{2\pi s \dfrac{d_{ascs-1}}{2\pi}}$$

$$= \frac{(b' + 5.26w)\, d_{ascs-1}}{s\, d_{ascs-1}}$$

$$= \frac{b' + 5.26w}{s}\quad ;$$

where $\Phi$ represents the total angle of winding rotation; $\Delta d_{e-1}$ represents the amount of rebound of the electrode in the cycle-end state; $r$ represents the inner wall radius of the casing; $q$ is the group margin; $s$ represents the thickness of the casing in mm; $d_{ascs-e}$ represents the sum of the thicknesses of the positive electrode 13, the first separator 12, the negative electrode 11 and the second separator 14 in the cycle-end state; and $d_{ascs-1}$ represents the sum of the thicknesses of the positive electrode 13, the first separator 12, the negative electrode 11 and the second separator 14 in the uncharged state; $a$ represents the spiral parameter of the jelly roll in the uncharged state, i.e., $a=a_1$; $b'$ represents a second constant, which is related to the type of the graphite and the compaction density of the negative electrode 11, and $-0.2 \leq b' \leq 1.5$; and w represents the weight percentage of the silicon in the active material of the negative electrode.

In some embodiments, when the particle size of the silicon satisfies $3\ \mu m < d_{50} < 8\ \mu m$, the compaction density $k$ of the electrode satisfies $1.50\ g/cm^3 < k < 1.75\ g/cm^3$, and the $\Delta d_{2-1}$ and $\Delta d_{e-1}$ are mainly affected by the pure silicon of the negative electrode. By optimizing the type and dosage of binder, the morphology of conductive agent, and the process route, the expansion can be effectively suppressed, and the parameters can be optimized.

In some embodiments, when the first parameter $R_1$ meets $0.6\ mm^{-1} < R_1 < 3.3\ mm^{-1}$ and the second parameter $R_2$ meets $1\ mm^{-1} < R_2 < 4.6\ mm^{-1}$ in the design of the cell, the cycle life and safety of the battery can be guaranteed.

In some embodiments, when the inner wall radius r of the casing 12 is greater than 20 mm, the content of the silicon is greater than 7%, and the ratio of the content of the silicon to the thickness of the casing is 0.22-0.42 mm⁻¹, the safety and reliability of the cell 11 can be improved.

In some embodiments, the radius of the cell is greater than 10 mm, and the content of the silicon is greater than 7%. This enables the cylindrical battery to maintain a good condition even when the negative electrode undergoes excessive expansion during using. In some specific embodiments, the radius of the cell is 10-50 mm, and the content of silicon is 7-50%. In some specific embodiments, the radius of the cell is any one of 15 mm, 23 mm, 25 mm, 28 mm, 30 mm, 35 mm, 40 mm, 45 mm and 50 mm, and the silicon content is any one of 8%, 9%, 10%, 12%, 15%, 18%, 20%, 25%, 30%, 35%, 40% and 45%.

In some embodiments, the compaction density of the electrode is 1.50-1.75 g/cm³. If the compaction coefficient of the electrode is less than 1.50 g/cm³ or more than 1.75 g/cm³, it would affect the safety and cycle life of the cylindrical battery.

In some embodiments, the rebound amount of the electrode in the fully charged state is 0.4-0.8 mm. When the rebound amount of the electrode in the fully charged state exceeds 0.8 mm, the rebound amount of the electrode after coiled layer by layer is superimposed, resulting in expanding the diameter of the whole jelly roll, and that the circumference of the electrode is increased when the spiral angle of the jelly roll is rotated by 360°, while the size of the foil is unchanged, resulting in the belt breakage. At the same time, the increase in the diameter of the jelly roll may also lead to the damage of the casing. In some specific embodiments, the rebound amount of the electrode in the fully-charged state of the cylindrical battery is 0.5 mm, 0.6 mm, or 0.7 mm.

In some embodiments, the rebound amount of the electrode in the cycle-end state is 0.6-1.0 mm. When the rebound amount of the electrode in the cycle-end state exceeds 1.0 mm, the rebound amount of the electrode after coiled layer by layer is superimposed, resulting in expanding the diameter of the whole jelly roll, and that the circumference of the electrode is increased when the spiral angle of the jelly roll is rotated by 360°, while the size of the foil is unchanged, resulting in the belt breakage, thus rendering a dropping cycle performance of the cell at the later stage of the cycling. At the same time, the increase in the diameter of the jelly roll may also lead to damage to the casing, aggravating the capacity of the cell at the later stage of the cycling. In some specific embodiments, the rebound amount of the electrode is 0.7 mm, 0.8 mm, or 0.9 mm when the cylindrical battery is in the cycle-end state.

In some embodiments, the cycle number of the cylindrical battery is 1000-1500.

In some embodiments, this application provides a method of preparing a cylindrical battery, which includes the following steps. A compaction-functional loosening agent is introduced into the negative electrode 11 to obtain the cylindrical battery. The compaction-functional loosening agent is analogous to a pore-making agent, which is directed to improve the looseness of the electrode when specifically needed for the cell of the cylindrical battery, and to provide an appropriate amount of expansion space for the expansion of the silicon negative electrode during charging, which can improve the overall rebound of the electrode. The compaction-functional agent includes at least one of a lithium salt, a high-melting-point solvent and an electrolyte additive. The lithium salt includes lithium hexafluorophosphate ($LiPF_6$), lithium tetrafluoroborate ($LiBF_4$), lithium bis(oxalic acid) borate (LiBOB), lithium bis(fluorosulphonyl)amide (LiFSI), lithium bis(trifluoromethanesulphonyl)amide (LiTFSI), lithium difluoro-oxalate borate (LiDFOB), lithium difluorophosphate ($LiPO_2F_2$) or a combination thereof. The high-melting-point solvent is ethylene carbonate (EC). The electrolyte additive includes fluoroethylene carbonate (FEC), vinylene carbonate (VC), 1,3-propane sultone (PS), ethylene sulfate (DTD), ethylene sulfite (ES), tris(trimethylsilyl) phosphate (TMSP), or a combination thereof. The compaction-functional loosening agent may also be a readily gasifiable substance, such as iodine ($I_2$) and aluminum chloride ($AlCl_3$). The dosage of the compaction-functional loosening agent is determined based on the silica content and the pore space required by the silica. The weight ratio of silicon to the active substance of the high-capacity negative electrode is w, and the weight ratio of the sum of the dosage of one or more additives to the active substance of the high-capacity negative electrode is *m*, where *w* is linearly correlated with *m*, and $0.5\% \leq m/w \leq 25\%$. The negative electrode includes a conductive agent, a bonding agent and an active substance, and the active substance of the high-capacity negative electrode refers to a substance other than the conductive agent and the bonding agent.

The present disclosure also provides a power battery pack, including a plurality of aforementioned cylindrical batteries and a pack, where the plurality of cylindrical batteries are arranged in the pack.

The present disclosure further provides an electrically-powered device, including the aforementioned power battery pack.

In some embodiments, the method of preparing the positive electrode 13 includes the following steps. A positive electrode active material, a conductive agent (carbon black (Super-P)) and polyvinylidene fluoride (PVDF) are mixed by uniform stirring in N-methyl-2-pyrrolidone (NMP) to form an active slurry, where a weight ratio of the positive electrode active material to the conductive agent to PVDF is 92:5:3. The active slurry is coated on a surface of a positive electrode collector by extrusion followed by drying at 85°C to obtain an active material layer, where the positive electrode collector is an Al foil with a thickness of 12 $\mu$m. The positive electrode collector coated with the active material layer was cold pressed, cut, and then dried under vacuum at 85°C for 4 h to obtain the positive electrode 13. The positive electrodes 13 used in both the examples and the comparative examples are the same. The positive active material used herein, without specifying the specific material, is NCM811, where NCM stands for the main components of nickel (Ni), cobalt (Co), and manganese (Mn), and 811 represents a ratio of nickel, to cobalt and to manganese of 0.8:0.1:0.1.

**Example 1**

The weight percentage w of silicon in the active material was 15%, the thickness s of the casing was 0.4 mm, the first constant *b* was -0.135, the second constant *b'* was -0.189, and w/s was 0.375 mm$^{-1}$ (in the range of 0.22-0.42 mm$^{-1}$).

The negative electrode active material, the conductive agent (single-wall carbon nanotubes (SWCNT) and carbon black (Super-P)), and the binder polyacrylic acid (polyacrylic acid, PAA)) were added to deionized water in a weight ratio of 95.0:1.0:4.0 and mixed uniformly to obtain the negative electrode active slurry, where the negative electrode active material was composed of 85% by weight of graphite and 15% by weight of silicon, and a weight ratio of the SWCNT to the Super-P was 1:9 in the conductive agent; and an appropriate amount of iodine was added during the stirring. The negative electrode active slurry was coated on two sides of a Cu foil with a thickness of 8 $\mu$m by extrusion,

and dried at 85°C, rolled, and treated at 118°C for removal of iodine, so as to obtain the negative electrode. The addition of iodine could alleviate the rebound of the electrode caused by the expansion of silicon.

The battery was prepared by the following steps. The positive electrode, a polypropylene (polypropylene, PP)/polyethylene (polyethylene, PE)/polypropylene (polypropylene, PP) separator and the negative electrode were wound together through the conventional battery production process to form a jelly roll. The jelly roll was then placed into a casing, and injected with electrolyte, sealed and subjected to formation to form a lithium-ion secondary battery, namely, Sample 1, where the compaction densities of the positive electrode and the negative electrode were 3.4 g/cm$^3$ and 1.6 g/cm$^3$, respectively; the electrolyte was composed of ethyl cellulose (ethyl cellulose, EC), ethyl methyl carbonate (ethyl methyl carbonate, EMC), and lithium hexafluorophosphate (LiPF$_6$); a volume ratio of EC to EMC was 3:7; and a concentration of LiPF$_6$ was 1 mol/L.

The rebound amount $\Delta d_{2-1}$ of the electrode of sample 1 in the fully-charged state was 0.43 mm, and the rebound amount $\Delta d_{e-1}$ of the electrode of sample 1 in the cycle-end state was 0.65 mm. The group margin $q$ was 0.90 when the particle size $d_{50}$ of silicon was 5 $\mu$m. The compaction density $k$ of the electrode was 1.6 g/cm$^3$. The first parameter $R_1$ of sample 1 was 1.25 mm$^{-1}$. The second parameter $R_2$ of sample 1 was 1.5 mm$^{-1}$. The capacity and energy density calibration and the cycling performance tests were performed for the sample 1, and the results were shown in Table 2.

**Example 2**

The weight percentage w of silicon in the active material was 20%, the thickness s of the casing was 0.6 mm, the first constant $b$ was -0.135, the second constant $b'$ was -0.189, and w/s was 0.33 mm$^{-1}$ (in the range of 0.22-0.42 mm$^{-1}$).

The negative electrode active material, the conductive agent (SWCNT and Super-P), and the binder polyacrylic acid (polyacrylic acid, PAA) were added to deionized water in a weight ratio of 94.0:1.0:5.0 and mixed uniformly to obtain the negative electrode active slurry, where the negative electrode active material was composed of 80% by weight of graphite and 20% by weight of silicon, and a weight ratio of the SWCNT to the Super-P was 1:9 in the conductive agent; and an appropriate amount of iodine was added during the stirring. The negative electrode active slurry was coated on two sides of a Cu foil with a thickness of 8 $\mu$m by extrusion, and dried at 85°C, rolled, and treated at 118°C for removal of iodine, so as to obtain the negative electrode. The addition of iodine could alleviate the rebound of the electrode caused by the expansion of silicon.

The battery was prepared by the following steps. The positive electrode, a polypropylene (polypropylene, PP)/polyethylene (polyethylene, PE)/polypropylene (polypropylene, PP) separator and the negative electrode were wound together through the conventional battery production process to form a jelly roll. The jelly roll was then placed into a casing, and injected with electrolyte, sealed and subjected to formation to form a lithium-ion secondary battery, namely, Sample 2, where the compaction densities of the positive electrode and the negative electrode were 3.4 g/cm$^3$ and 1.6 g/cm$^3$, respectively; the electrolyte was composed of ethyl cellulose (ethyl cellulose, EC), ethyl methyl carbonate (ethyl methyl carbonate, EMC), and lithium hexafluorophosphate (LiPF$_6$); a volume ratio of EC to EMC was 3:7; and a concentration of LiPF$_6$ was 1 mol/L.

The rebound amount $\Delta d_{2-1}$ of the electrode of sample 2 in the fully-charged state was 0.59 mm, and the rebound amount $\Delta d_{e-1}$ of the electrode of sample 2 in the cycle-end state was 0.72 mm. When the silicon particle size d50 was 5 $\mu$m, the group margin $q$ was 0.90. The compaction density $k$ of the electrode was 1.6 g/cm$^3$. The first parameter $R_1$ of the sample 2 was 1.19 mm$^{-1}$. The second parameter $R_2$ of the sample 2 was 1.44 mm$^{-1}$. The capacity and energy density calibration and the cycling performance tests were performed for the sample 2, and the results were shown in Table 2.

**Comparative Example 1**

The weight percentage w of silicon in the active material was 15%, the thickness s of the casing was 0.3 mm, the first constant $b$ was 0.7935, the second constant $b'$ was 1.308, and w/s was 0.5 mm$^{-1}$ (without the range of 0.22-0.42 mm$^{-1}$).

The negative electrode active material, the conductive agent carbon black (Super-P), a plasticizer carboxymethylcellulose sodium (carboxymethylcellulose sodium, CMC) and a binder styrene-butadiene copolymer (styrene-butadiene copolymer, SBR) were added to deionized water in a weight ratio of 96.0:1.0:1.5:1.5 and mixed uniformly under stirring to obtain the negative electrode active slurry, where the negative electrode active material was composed of 85% by weight of graphite and 15% by weight of silicon. The negative electrode active material layer slurry was coated on two sides of a Cu foil with a thickness of 8 $\mu$m by extrusion, and dried at 85°C, followed by post-processes to obtain a negative electrode.

The battery was prepared by the following steps. The positive electrode, a polypropylene (polypropylene, PP)/polyethylene (polyethylene, PE)/ polypropylene (polypropylene, PP) separator and the negative electrode were wound together through the conventional battery production process to form a jelly roll. The jelly roll was then placed into a casing, and injected with electrolyte, sealed and subjected to formation to form a lithium-ion secondary battery, namely, Comparative Sample 1, where the compaction densities of the positive electrode and the negative electrode were 3.4 g/cm$^3$ and 1.6 g/cm$^3$, respectively; the electrolyte was composed of ethyl cellulose (ethyl cellulose, EC), ethyl methyl carbonate (ethyl methyl carbonate, EMC), and lithium hexafluorophosphate (LiPF$_6$); a volume ratio of EC to EMC was 3:7; and a concentration of LiPF$_6$ was 1 mol/L.

The rebound amount $\Delta d_{2-1}$ of the electrode of the Comparative Sample 1 in the fully-charged state was 0.49 mm, and the rebound amount $\Delta d_{e-1}$ of the electrode of the comparative sample 1 in the cycle-end state was 0.72 mm. The group margin $q$ was 0.90 when the particle size $d_{50}$ of silicon was 5 $\mu$m. The compaction density $k$ of the electrode was 1.6 g/cm$^3$. The first parameter $R_1$ of the comparative sample 1 was 4.76 mm$^{-1}$. The second parameter $R_2$ of the comparative sample 1 was 6.99 mm$^{-1}$. The capacity and energy density calibration and the cycling performance tests were performed for the comparative sample 1, and the results were shown in Table 2.

**Comparative Example 2**

The weight percentage w of silicon in the active material was 25%, the thickness s of the casing was 0.55 mm, the first constant $b$ was 0.7935, the second constant $b'$ was 1.308, and w/s was 0.46 mm$^{-1}$ (out of the range of 0.22-0.42 mm$^{-1}$).

The negative electrode active material, the conductive agent carbon black (Super-P), a plasticizer carboxymethylcellulose sodium (carboxymethylcellulose sodium, CMC) and a binder styrene-butadiene copolymer (styrene-butadiene copolymer, SBR) were added to deionized water in a weight ratio of 95.0: 1.0:2.0:2.0 and mixed uniformly under stirring to obtain a negative electrode active slurry, where the negative electrode active material was composed of 75% by weight of graphite and 25% by weight of silicon. The negative electrode active slurry was coated on two sides of a Cu foil with a thickness of 8 $\mu$m by extrusion, and dried at 85°C followed by post-processing to obtain a negative electrode.

The battery was prepared by the following steps. The positive electrode, a PP/PE/PP separator and the negative electrode were wound together through the conventional battery production process to form a jelly roll. The jelly roll was then placed into a casing, and injected with electrolyte, sealed and subjected to formation to form a lithium-ion secondary battery, namely, Comparative Sample 2, where the compaction densities of the positive electrode and the negative electrode were 3.4 g/cm$^3$ and 1.6 g/cm$^3$, respectively; the electrolyte was composed of ethyl cellulose (ethyl cellulose, EC), ethyl methyl carbonate (ethyl methyl carbonate, EMC), and lithium hexafluorophosphate (LiPF$_6$); a volume ratio of EC to EMC was 3:7; and a concentration of LiPF$_6$ was 1 mol/L.

The rebound amount $\Delta d_{2-1}$ of the electrode of the comparative sample 2 in the fully-charged state was 0.59 mm, and the rebound amount $\Delta d_{e-1}$ of the electrode of the comparative sample 2 in the cycle-end state was 0.74 mm. The group margin $q$ was 0.94 when the particle size $d_{50}$ of silicon was 5 $\mu$m. The compaction density $k$ of the electrode was 1.6 g/cm$^3$. The first parameter $R_1$ of the comparative sample 2 was 3.36 mm$^{-1}$. The second parameter $R_2$ of the comparative sample 2 was 4.77 mm$^{-1}$. The capacity and energy density calibration and the cycling performance tests were performed for the comparative sample 2, and the results were shown in Table 2.

Samples 1-2 and comparative samples 1-2 were subjected to capacity and energy density calibration and cycling performance tests. The parameters for the capacity calibration specifically include the upper charging limit voltage of 4.2V, the lower discharging limit voltage of 2.75V, and the current of 1/3C (equal to about 10A). The formula for the energy density calibration is expressed by (capacity of the cell*median voltage)/weight of the cell. The cycling performance test is specifically as follows: the capacity of the cell is C, and the charging/discharging cycle is carried out in the voltage range of 2.75-4.2 V with a current of 1C. The state of the casing can be observed with naked eyes.

**Table 1** Tests results for samples

| | w/s | $R_1$ | $R_2$ | Capacity | Energy density | Cycling performance | State of the casing |
|---|---|---|---|---|---|---|---|
| Sample 1 | 0.375 | 1.25 | 1.5 | 30 | 309 | 1380 | OK |
| Sample 2 | 0.42 | 1.185 | 1.44 | 34 | 330 | 1190 | OK |
| Comparative Sample 1 | 0.5 | 4.76 | 6.99 | 31 | 310 | Plunging after 775 cycles | NG |
| Comparative Sample 2 | 0.46 | 3.36 | 4.77 | 34 | 338 | Plunging after 502 cycles | NG |

Note: the unit of w/s, $R_1$ and $R_2$ is mm$^{-1}$; the unit of cell capacity is Ah; the unit of energy density is Wh/kg; the cycling performance is represented by the number of cycles; "OK" represents that the casing is in good condition without being torn and broken; and "NG" represents that the casing is torn and damaged, and in a bad condition.

As could be seen from Table 1, for the Comparative Example 1, the ratio (w/s) of silicon content to the thickness of the casing was not in the range of 0.22-0.42 mm$^{-1}$, mainly due to the fact that the comparative sample 1 was not added with the compaction functional loosening agent. The first parameter $R_1$ of the comparative sample 1 was greater than 3.3 mm$^{-1}$, the second parameter $R_2$ of the comparative sample 1 was greater than 4.6 mm$^{-1}$, and the cycle life of the comparative sample 1 was significantly lower than that of the samples 1 and 2. For the comparative sample 2, the ratio (w/s) of the silicon content to the thickness of the casing was not in the range of 0.22-0.42 mm$^{-1}$, the first parameter $R_1$ was greater than 3.3 mm$^{-1}$, and the second parameter $R_2$ was greater than 4.6 mm$^{-1}$, the main reason for which was that the comparative sample 2 was not added with the compaction functional loosening agent. As a result, the cycling performance of the comparative sample 2 sharply dropped during the cycling, and the casing of the comparative sample 2 was torn and broken. In summary, the ratio of the silicon content to the thickness of the casing affected whether the sharp dropping of the cycling performance existed during the cycling process of the cylindrical battery, and the first parameter $R_1$ and the second parameter $R_2$ could influence whether the casing of the cylindrical battery was torn and broken.

Although embodiments of the present disclosure are described in detail above, it is apparent to those skilled in the art that various modifications and variations can still be made to these embodiments. However, it should be understood that such modifications and variations made without departing from the scope and spirit of the present disclosure shall fall within the scope of the disclosure defined by the appended claims.

**Claims**

1. A cylindrical battery, comprising:

   a cell; and
   a casing;
   **characterized in that** the cell is arranged in the casing; the cell comprises a positive electrode and a negative electrode; an active material of the negative electrode comprises silicon and graphite; and the negative electrode satisfies the following condition:

$$R_1 = \frac{b + 4.23w}{s} ;$$

   and

$$0.6 \leq R_1 \leq 3.3;$$

   wherein $R_1$ represents a first parameter in mm$^{-1}$; $b$ represents a first constant, which is related to a type of the graphite and a compaction density of the negative electrode, and $-0.15 \leq b \leq 0.8$; $w$ represents a weight percentage of the silicon in the active material of the negative electrode; and s represents a thickness of the casing, mm.

2. The cylindrical battery according to claim 1, **characterized in that** a range of the first parameter $R_1$ is 0.6-3 mm$^{-1}$, 0.6-2.5 mm$^{-1}$ or 0.6-2.0 mm$^{-1}$.

3. The cylindrical battery according to claim 1, **characterized in that** the negative electrode further satisfies the following formulas:

$$R_2 = \frac{b^{*} + 5.26w}{s} ;$$

   and

$$1 \leq R_2 \leq 4.6;$$

wherein $R_2$ represents a second parameter in $mm^{-1}$; $b'$ represents a second constant, which is related to the type of the graphite and the compaction density of the negative electrode, and $-0.2 \leq b' \leq 1.5$; $w$ represents the weight percentage of the silicon in the active material of the negative electrode; and s represents the thickness of the casing, mm.

4. The cylindrical battery according to claim 3, **characterized in that** a range of the second parameter $R_2$ is 1-4 $mm^{-1}$, 1-3 $mm^{-1}$ or 1-2.5 $mm^{-1}$.

5. The cylindrical battery according to claim 1 or 2, **characterized in that** $w$ and $s$ satisfy the following formula:

$$0.22 \leq \frac{w}{s} \leq 0.42$$

;

wherein $w$ represents the weight percentage of the silicon in the active material of the negative electrode; and $s$ represents the thickness of the casing, mm.

6. The cylindrical battery according to claim 5, **characterized in that** a ratio of $w$ to $s$ is 0.23 $mm^{-1}$, 0.25 $mm^{-1}$, 0.27 $mm^{-1}$, 0.29 $mm^{-1}$, 0.30 $mm^{-1}$, 0.31 $mm^{-1}$, 0.33 $mm^{-1}$, 0.35 $mm^{-1}$, 0.37 $mm^{-1}$, 0.39 $mm^{-1}$, 0.40 $mm^{-1}$, or 0.41 $mm^{-1}$.

7. The cylindrical battery according to claim 1 or 2, **characterized in that** the thickness of the casing is 0.1-1.0 mm.

8. The cylindrical battery according to claim 1 or 2, **characterized in that** the graphite is a natural graphite or an artificial graphite.

9. The cylindrical battery according to claim 1 or 2, **characterized in that** the compaction density of the negative electrode is 1.50-1.75 $g/cm^3$.

10. The cylindrical battery according to claim 1 or 2, **characterized in that** the silicon has a particle size of 3-8 $\mu m$.

11. The cylindrical battery according to claim 1 or 2, **characterized in that** the weight percentage of the silicon in the active material of the negative electrode is 7-50%.

12. The cylindrical battery according to claim 1 or 2, **characterized in that** the positive electrode is prepared through steps of:

adding a positive electrode active material, a conductive agent, and polyvinylidene fluoride (PVDF) to N-methyl-2-pyrrolidone (NMP) followed by stirring to form an active slurry, wherein the conductive agent is carbon black (Super-P), and a weight ratio of the positive electrode active material to the conductive agent to PVDF is 92:5:3; coating the active slurry on a surface of a positive electrode collector by extrusion followed by drying at 85°C to obtain an active material layer, wherein the positive electrode collector is an Al foil with a thickness of 12 $\mu m$; and subjecting the positive electrode collector coated with the active material layer to cold pressing, cutting and drying under vacuum at 85°C for 4 h to obtain the positive electrode.

13. A power battery pack, comprising:

a pack; and
the cylindrical battery according to claim 1 or 2;
**characterized in that** the cylindrical battery is provided in plurality, and a plurality of cylindrical batteries are arranged in the pack.

14. An electrically-powered device, comprising:
the power battery pack according to claim 13.

Fig. 1

## INTERNATIONAL SEARCH REPORT

| International application No. |
| --- |
| **PCT/CN2023/094776** |

**A. CLASSIFICATION OF SUBJECT MATTER**

H01M10/0525(2010.01)i; H01M4/133(2010.01)i; H01M4/134(2010.01)i; H01M10/0587(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 电池, 负极, 硅, 石墨, 压实密度, 壳体, 厚度, battery, batteries, negative, anode, Si, silicon, graphite, compaction, density, shell, thickness

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116072958 A (SHANGHAI BATTERO NEW ENERGY TECHNOLOGY CO., LTD.) 05 May 2023 (2023-05-05) <br> claims 1-10, and description, paragraphs 0028-0077 | 1-14 |
| A | CN 110600696 A (SHENZHEN BAK POWER BATTERY CO., LTD.) 20 December 2019 (2019-12-20) <br> entire document | 1-14 |
| A | CN 115394951 A (JIANGSU ZENERGY BATTERY TECHNOLOGIES CO., LTD.) 25 November 2022 (2022-11-25) <br> entire document | 1-14 |
| A | US 2017125806 A1 (SANYO ELECTRIC CO., LTD.) 04 May 2017 (2017-05-04) <br> entire document | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 September 2023** | **26 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094776**

| Patent document cited in search report | | | Publication date (day/month/year) | Patent family member(s) | | | Publication date (day/month/year) |
|---|---|---|---|---|---|---|---|
| CN | 116072958 | A | 05 May 2023 | None | | | |
| CN | 110600696 | A | 20 December 2019 | None | | | |
| CN | 115394951 | A | 25 November 2022 | None | | | |
| US | 2017125806 | A1 | 04 May 2017 | WO | 2016035289 | A1 | 10 March 2016 |
| | | | | CN | 106797020 | A | 31 May 2017 |
| | | | | CN | 106797020 | B | 10 May 2019 |
| | | | | JP | WO2016035289 | A1 | 15 June 2017 |
| | | | | US | 10263252 | B2 | 16 April 2019 |
| | | | | JP | 6644692 | B2 | 12 February 2020 |

Form PCT/ISA/210 (patent family annex) (July 2022)